(19) Europäisches Patentamt / European Patent Office / Office européen des brevets

(11) **EP 2 505 253 B1**

(12) **EUROPEAN PATENT SPECIFICATION**

(45) Date of publication and mention
of the grant of the patent:
**25.12.2013   Bulletin 2013/52**

(51) Int Cl.:
**B01D 46/24** (2006.01)

(21) Application number: **12161022.4**

(22) Date of filing: **23.03.2012**

(54) **Plugged honeycomb structure**

Abgedichtete Wabenstruktur

Structure en nid d'abeille raccordée

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.03.2011   JP 2011072753**

(43) Date of publication of application:
**03.10.2012   Bulletin 2012/40**

(73) Proprietor: **NGK Insulators, Ltd.
Nagoya-shi, Aichi 467-8530 (JP)**

(72) Inventor: **Iida, Tomohiro
Nagoya-shi, Aichi 467-8530 (JP)**

(74) Representative: **Paget, Hugh Charles Edward et al
Mewburn Ellis LLP
33 Gutter Lane
London
EC2V 8AS (GB)**

(56) References cited:
**EP-A1- 1 857 163        EP-A2- 1 769 838
US-A1- 2006 213 164**

**Description**

BACKGROUND OF THE INVENTION

Field of the Invention

The present invention relates to a plugged honeycomb structure suitably for use as a dust collecting filter such as a diesel particulate filter (DPF).

Description of the Related Art

Exhaust gases discharged from internal combustion engines such as diesel engines include a large amount of soot which becomes a cause for environmental pollutions. Therefore, filters for catching (filtering) the soot to remove the soot from the exhaust gases are mounted on exhaust systems of these internal combustion engines.

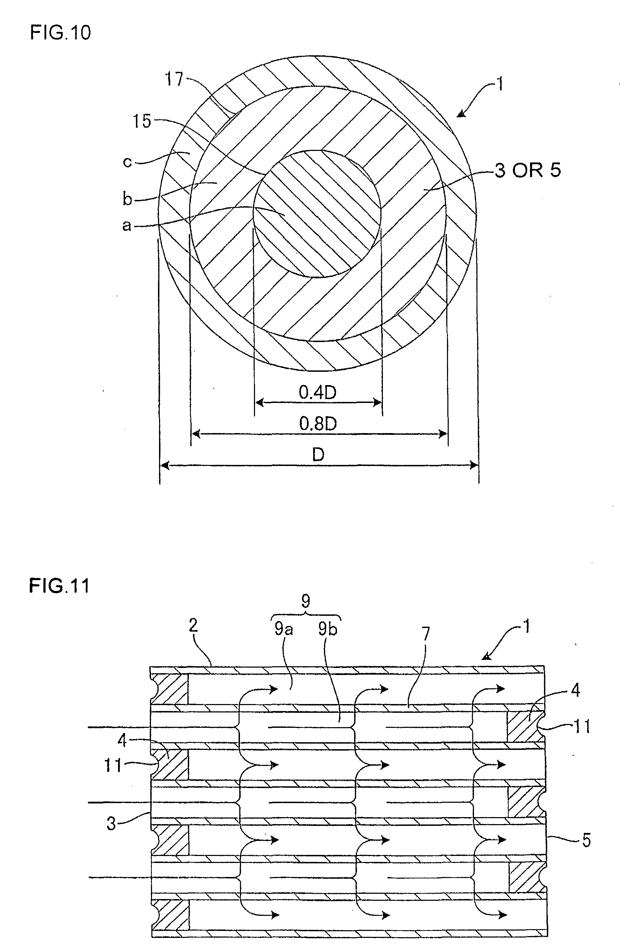

Usually as the filter for use in such a purpose, as shown in Fig. 11, there is used a plugged honeycomb structure 1 including a honeycomb structured body 2 where a plurality of cells 9 communicating between an inlet end surface 3 which becomes an inlet side of a fluid and an outlet end surface 5 which becomes an outlet side of the fluid are partitioned by porous partition walls 7; and plugged portions 4 to plug open frontal areas of predetermined cells 9a on the side of the inlet end surface 3 and open frontal areas of remaining cells 9b on the side of the outlet end surface 5.

In the filter constituted of the plugged honeycomb structure 1 having such a constitution, the exhaust gas flows into the plugged honeycomb structure 1 through the inlet end surface 3. The soot included in the exhaust gas is removed, and then the exhaust gas flows out of the structure through the outlet end surface 5. Specifically, the exhaust gas first flows into the cells 9b whose open frontal areas are not plugged on the inlet end surface 3 side of the plugged honeycomb structure 1 and are plugged on the outlet end surface 5 side. The exhaust gas passes through pores of the porous partition walls 7, moves to the cells 9a whose open frontal areas are plugged on the inlet end surface 3 side and are not plugged on the outlet end surface 5 side, and is discharged to the outside through the cells 9a. In this case, the partition walls 7 become filter layers, and the soot in the exhaust gas is caught by the partition walls 7, and deposited on the partition walls 7.

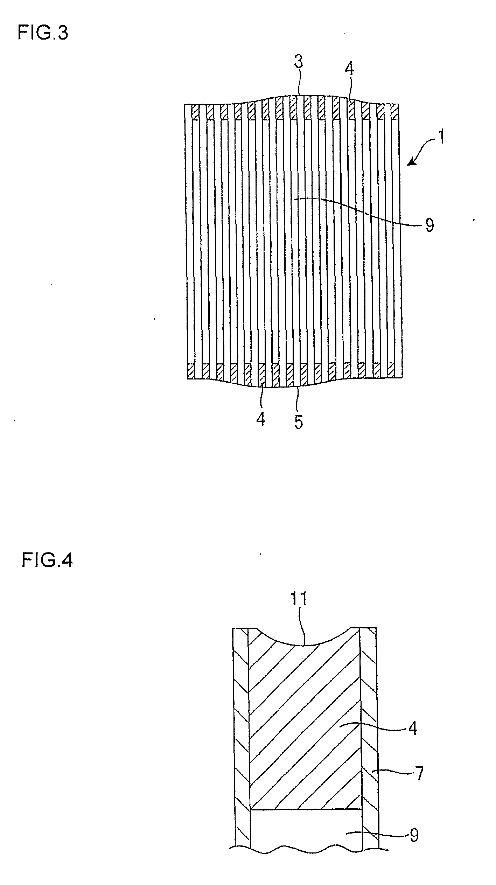

Meanwhile, the plugged honeycomb structure 1 is obtained by forming the plugged portions 4 in the honeycomb structured body 2 prepared by extrusion-forming or the like. In the plugged honeycomb structure 1 obtained by such a method, however, the inlet end surface 3 and the outlet end surface 5 are not smoothed, and undulations are often generated in the surfaces as shown in Fig. 3. Moreover, when the undulations are generated in the inlet end surface 3 and the outlet end surface 5, variations are generated in lengths of the cells 9, whereby variations are also generated in an inflow resistance of the cells 9. That is, the longer the cells 9 are, the larger the inflow resistance becomes. An inflow speed of the exhaust gas becomes slow. Consequently, in the long cells 9, the soot is easily deposited in the vicinity of the inlet end surface 3. In the worst case, the cells 9 are clogged with the soot, which results in the increase of a pressure loss.

Moreover, the plugged portions 4 of the plugged honeycomb structure 1 are usually formed by charging the cells with a constituent material of the plugged portions in a slurried state or the like, followed by firing. However, as shown in Fig. 4, a recess portion (a shrinkage cavity) 11 is generated at an end of each of the plugged portions 4 during the firing. When the recess portion 11 is present at the end of the plugged portion 4 in this manner, the soot is easily deposited at the end of the plugged portion 4 on the inlet end surface 3 side. In general, when the filter constituted of the plugged honeycomb structure is used continuously for a long period of time, a treatment (regeneration) of burning and removing the deposited soot is periodically performed so that the pressure loss increased by the soot deposited in the filter with an elapse of time is decreased to return a filter performance to an initial state. However, the soot deposited at the ends of the plugged portions 4 is not easily completely burnt during the regeneration of the plugged honeycomb structure 1, and the unburnt soot remains as it is at the ends of the plugged portions 4. Moreover, the soot which remains at the ends of the plugged portions 4 in this manner is gradually accumulated during the use for the long period of time, and the soot finally covers not only the ends of the plugged portions 4 but also the open frontal areas of the adjacent cells 9. In consequence, the pressure loss of the filter rapidly increases, which incurs the deterioration of fuel efficiency.

As a measure for suppressing the deposition of the soot at the ends of the plugged portions, Patent Document 1 has suggested a technology of densifying the surfaces of the plugged portions to decrease surface roughness so that the soot is not easily deposited in the plugged portions (see Patent Document 1). In this technology, as a specific method for densifying the surfaces of the plugged portions to decrease the surface roughness, the cells are first charged with the constituent material of the plugged portions, followed by firing, as usual. Afterward, the end surfaces of the plugged honeycomb structure are spray-coated with a densifying material having regulated characteristics, to attach the material to the ends of the plugged portions.

In such a method, however, the densifying material to spray-coat the end surfaces of the plugged honeycomb structure enters the cells opened in the end surfaces of the plugged honeycomb structure, and also adheres to the surfaces of the partition walls in the vicinity of the open frontal areas of the cells. Therefore, not only the ends of the plugged portions but also the partition walls are densified. As described above, the porous partition walls by which the cells are partitioned function as the filter layers for catching the soot. Therefore, when the densifying material adheres to part of the partition walls to densify the walls and hence the exhaust gas does not easily pass through the walls, areas of the filter layers decrease, which incurs the deterioration of an ability to collect the soot and the increase of the pressure loss. Moreover, in such a method, the soot is not easily deposited in the plugged portions, but the above-mentioned variations of the lengths of the cells cannot be eliminated.

The document EP-A-1857163 describes applying a flattening step to the end faces of a plugged ceramic honeycomb.

[Patent Document 1] JP-A-2005-211836

SUMMARY OF THE INVENTION

The present invention has been developed in view of such conventional situations, and an object thereof is to provide a plugged honeycomb structure which does not decrease an area of a filter layer, but suppresses the variations of lengths of cells and the deposition of soot at ends of plugged portions, and does not easily increase a pressure loss, when the structure is used as a filter such as a DPF.

To achieve the above object, according to the present invention, the following plugged honeycomb structure is provided.

A plugged honeycomb structure comprising: a honeycomb structured body where a plurality of cells communicating between an inlet end surface which becomes an inlet side of a fluid and an outlet end surface which becomes an outlet side of the fluid are partitioned by porous partition walls; and plugged portions to plug open frontal areas of the predetermined cells on the side of the inlet end surface and open frontal areas of the remaining cells on the side of the outlet end surface, wherein the plugged portions are formed by charging the cells with a constituent material of the plugged portions, followed by firing, and in a region having an area which is 35% or larger of the total area of the inlet end surface and the outlet end surface, a smoothing treatment by end-surface polishing is performed so that a depth of a recess portion generated at an end of each of the plugged portions during the firing becomes small.

The plugged honeycomb structure according to [1], wherein the smoothing treatment by the end-surface polishing is performed so that the depth of the recess portion becomes smaller than 0.02 mm.

The plugged honeycomb structure according to [1] or [2], wherein in a region where the smoothing treatment by the end-surface polishing is performed, an area of a region included in the outside of a circle having, as a center thereof, a center of the largest circle contained in each of the inlet end surface and the outlet end surface and having a diameter which is 40% of a diameter of the largest circle is an area which is 40% or larger of the total area of the outside of the circle.

The plugged honeycomb structure according to any one of [1] to [3], wherein an area of the region where the smoothing treatment by the end-surface polishing is performed is an area which is 84% or smaller of the total area of the inlet end surface and the outlet end surface.

Effect of the Invention

In a plugged honeycomb structure of the present invention, a region having an area which is 35% or larger of the total area of the inlet end surface and the outlet end surface is subjected to a smoothing treatment by end-surface polishing so that a depth of a recess portion generated at an end of each plugged portion during firing becomes small. Consequently, in the region, lengths of cells are uniformed, and variations of an inflow resistance are suppressed. In consequence, it is possible to suppress the clogging of the cells due to the deposition of the soot in specific cells in the vicinity of the inlet end surface in a concentrated manner and to suppress the increase of a pressure loss due to the clogging. Moreover, in the region, the depth of the recess portion at the end of each plugged portion becomes small, and hence the soot is not easily deposited at the ends of the plugged portions. In consequence, it is possible to suppress the clogging of open frontal areas of the cells due to the deposition of the soot which is unburnt and remains during regeneration, and it is possible to prevent the rapid increase of the pressure loss and the deterioration of fuel efficiency due to the increase. Moreover, these effects are realized by the smoothing treatment by the end-surface polishing. In consequence, a problem such as the decrease of an area of a filter layer does not occur.

The invention also consists in the methods here described for making the plugged honeycomb structure of the invention.

BRIEF DESCRIPTION OF THE DRAWING

Fig. 1 is a sectional view showing an example of a plugged honeycomb structure of the present invention;

Fig. 2 is a plan view showing an end surface (an inlet end surface or an outlet end surface) of the plugged honeycomb structure of the present invention;

Fig. 3 is a sectional view showing that undulations are generated in end surfaces of the plugged honeycomb structure;

Fig. 4 is a sectional view showing that a recess portion (a shrinkage cavity) is generated at an end of a plugged portion;

Fig. 5 is a sectional view showing states of the end surfaces of the plugged honeycomb structure before and after performing a smoothing treatment by end-surface polishing;

Fig. 6 is a sectional view showing states of the end of the plugged portion before and after performing the smoothing treatment by the end-surface polishing;

Fig. 7 is a plan view showing a preferable configuration of a region where the smoothing treatment by the end-surface polishing is performed in the end surface (the inlet end surface or the outlet end surface) of the plugged honeycomb structure;

Fig. 8 is an explanatory view showing an example of a method of the smoothing treatment by the end-surface polishing;

Fig. 9 is an explanatory view showing the example of the method of the smoothing treatment by the end-surface polishing;

Fig. 10 is an explanatory view showing a region where the smoothing treatment by the end-surface polishing is performed in examples and comparative examples;

Fig. 11 is a sectional view showing a conventional plugged honeycomb structure.

## DESCRIPTION OF THE PREFERRED EMBODIMENTS

Hereinafter, the present invention will be described with respect to a specific embodiment, but the present invention is not limited to this embodiment when interpreted, and various changes, modifications and improvements can be added thereto on the basis of knowledge of a person skilled in the art without departing from the scope of the present invention.

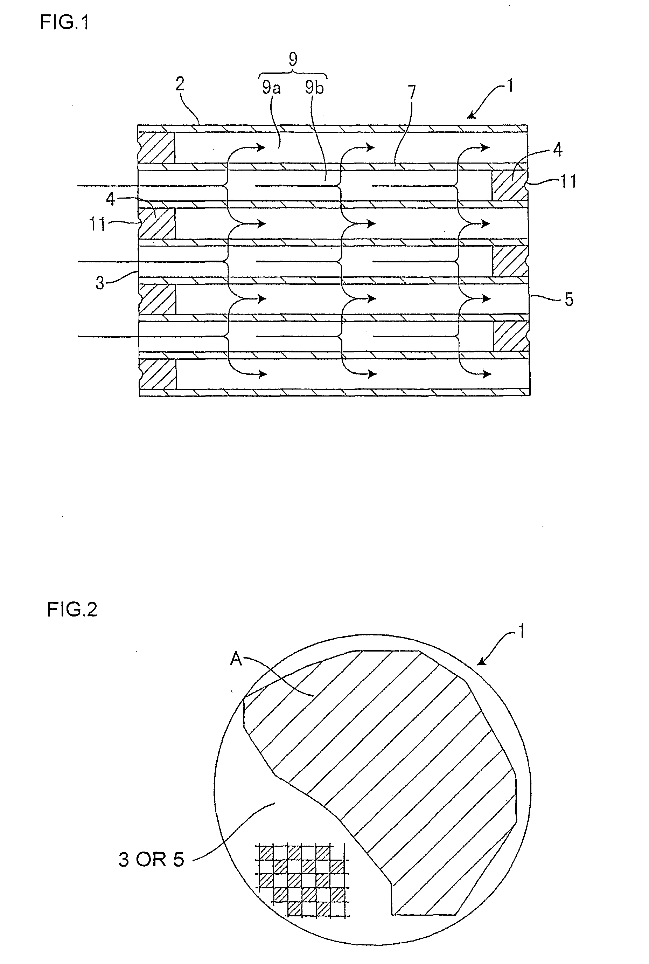

As shown in Fig. 1, a plugged honeycomb structure 1 of the present invention includes a honeycomb structured body 2 where a plurality of cells 9 communicating between an inlet end surface 3 which becomes an inlet side of a fluid and an outlet end surface 5 which becomes an outlet side of the fluid are partitioned by porous partition walls 7; and plugged portions 4 to plug open frontal areas of predetermined cells 9a on the side of the inlet end surface 3 and open frontal areas of remaining cells 9b on the side of the outlet end surface 5.

When the plugged honeycomb structure 1 having such a constitution is used as a filter such as a DPF, a basic purification mechanism is similar to the above-mentioned conventional plugged honeycomb structure. That is, an exhaust gas first flows into the cells 9b whose open frontal areas are not plugged on the inlet end surface 3 side of the plugged honeycomb structure 1 and are plugged on the outlet end surface 5 side thereof, and passes through pores of the porous partition walls 7. The exhaust gas moves to the cells 9a whose open frontal areas are plugged on the inlet end surface 3 side and are not plugged on the outlet end surface 5 side, and is discharged to the outside through the cells 9a. In this case, the partition walls 7 become filter layers, and soot in the exhaust gas is caught by the partition walls 7, and deposited on the partition walls 7.

In the plugged honeycomb structure 1 of the present invention, the plugged portions 4 are formed by charging the cells 9 with a constituent material of the plugged portions in a slurried state or the like, followed by firing. As shown in Fig. 4, a recess portion (a shrinkage cavity) 11 is generated at an end of the plugged portion 4 during this firing. A depth of the recess portion 11 is usually from about 0.06 to 0.15 mm. Moreover, as a characteristic constitution of the plugged honeycomb structure 1 of the present invention, in a region A having an area which is 35% or larger of the total area of the inlet end surface 3 and the outlet end surface 5 shown in Fig. 2, a smoothing treatment by end-surface polishing is performed so that a depth of the recess portion 11 generated at the end of the plugged portion 4 during the firing becomes small.

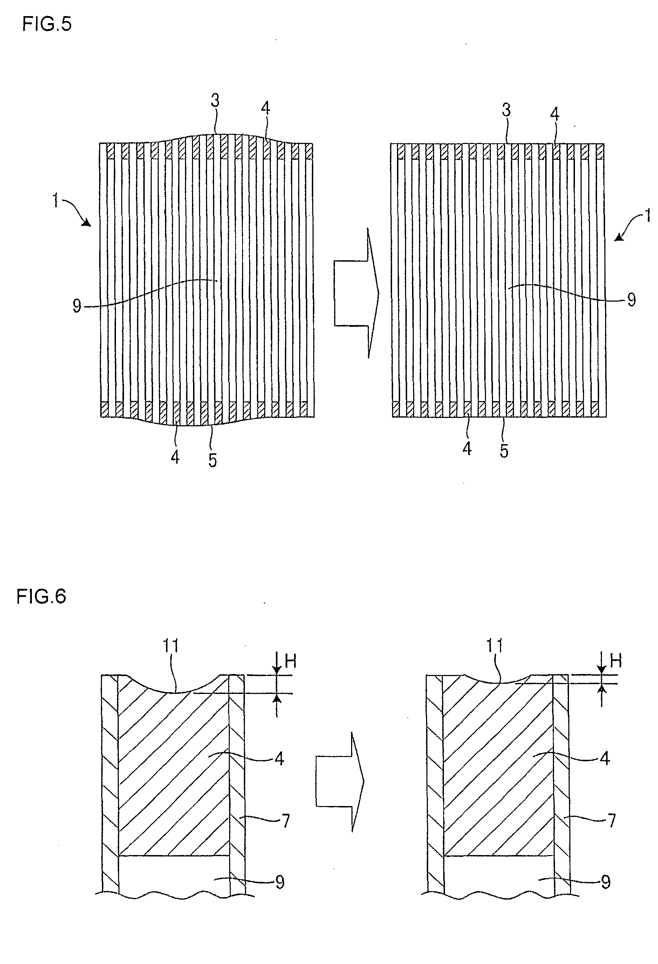

When portions of the inlet end surface 3 and the outlet end surface 5 in which undulations are generated are smoothed by this smoothing treatment by the end-surface polishing as shown in Fig. 5, lengths of the cells 9 are uniformed, and variations of an inflow resistance are suppressed. In consequence, it is possible to suppress the clogging of the cells due to the deposition of the soot in specific cells in the vicinity of the inlet end surface in a concentrated manner and to suppress the increase of a pressure loss due to the clogging. Moreover, when a depth H of the recess portion 11 at the end of the plugged portion 4 becomes small by the smoothing treatment by the end-surface polishing as shown in Fig. 6, the soot does not easily enter the recess portion 11. Therefore, the soot is not easily deposited at the end of the plugged portion 4. In consequence, it is possible to suppress the clogging of the open frontal areas of the cells 9 around the plugged portions 4 due to the deposition of the soot which is unburnt and remains during regeneration. It is possible to prevent the rapid increase of the pressure loss or the deterioration of fuel efficiency due to the increase. Moreover, these effects are realized by the smoothing treatment by the end-surface polishing. In consequence, unlike the above-mentioned conventional technology, a problem such as the decrease of an area of the filter layer does not occur.

It is to be noted that when the area of the region subjected to the smoothing treatment by the end-surface polishing is smaller than 35% of the total area of the inlet end surface 3 and the outlet end surface 5, a region, in which it is possible to uniform the lengths of the cells 9 and to suppress the deposition of the soot at the ends of the plugged portions 4, is excessively small. Thus, a sufficient effect cannot be obtained.

In the plugged honeycomb structure 1 of the present invention, the smoothing treatment by the end-surface polishing is preferably performed so that the depth H of the recess portion 11 becomes smaller than 0.02 mm. When the depth H of the recess portion 11 is smaller than 0.02 mm, it is possible to remarkably effectively suppress the deposition of the soot at the ends of the plugged portions 4. The depth of the recess portion 11 can be measured by using, for example, an optical gauge.

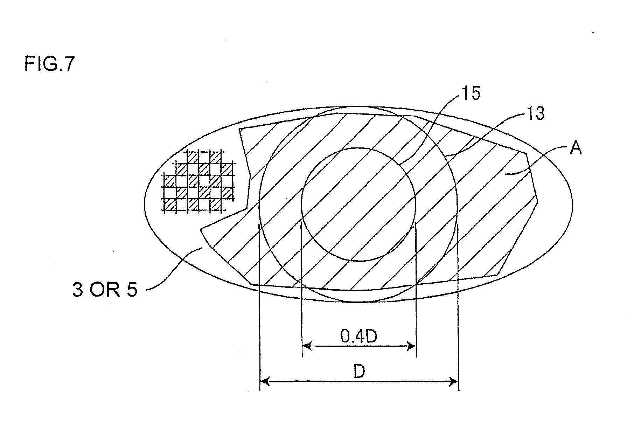

In the plugged honeycomb structure 1 of the present invention, in the region A where the smoothing treatment by the end-surface polishing is performed as shown in Fig. 7, an area of a region included in the outside of a circle 15 having, as a center thereof, a center of the largest circle 13 contained in each of the inlet end surface 3 and the outlet end surface 5 and having a diameter 0.4D which is 40% of a diameter D of the largest circle 13 is preferably 40% or larger of the total area of the outside of the circle 15. The area is more preferably 50% or larger, and further preferably 60% or larger. In the region A where the smoothing treatment by the end-surface polishing is performed, when the area of the region included in the outside of the circle 15 is 40% or larger of the total area of the outside of the circle 15, the variations of the lengths of the cells around an outer peripheral portion are suppressed to a certain degree. The variations of the inflow resistance to the respective cells become small, and the remarkable increase of the pressure loss can be suppressed. Moreover, it is possible to prevent a situation where an inflow speed to the specific cell remarkably lowers owing to the unbalance of a local flow (in the worst case, a situation where the cells are clogged), and hence it is possible to suppress the increase of the pressure loss.

It is to be noted that Fig. 7 shows an example where the respective end surfaces (the inlet end surface 3 and the outlet end surface 5) are elliptic. However, when each of the end surfaces is round, the largest circle contained in the end surface becomes a circle which matches the outer periphery of the end surface (the circle having the same diameter and center as those of the end surface). In this case, in the region where the smoothing treatment by the end-surface polishing is performed, the area of the region included in the outside of the circle having the same center as that of each end surface and having a diameter which is 40% of the diameter of the end surface is preferably 40% or larger of the total area of the outside of the circle.

In the plugged honeycomb structure 1 of the present invention, the area of the region A where the smoothing treatment by the end-surface polishing is performed may be 35% or larger of the total area of the inlet end surface 3 and the outlet end surface 5. There is not any special restriction on an upper limit of the area. However, when an oxidation catalyst such as Pt, Pd, Rh or Ag is loaded onto the partition walls of the plugged honeycomb structure 1 to promote the burning of the soot during the regeneration, the area of the region A where the smoothing treatment by the end-surface polishing is performed is preferably 84% or smaller of the total area of the inlet end surface and the outlet end surface.

When the smoothing treatment by the end-surface polishing is performed, part of abrasive powder generated by the treatment enters the cells and adheres to the partition walls. A large part of the adhering abrasive powder is removed by air blowing or the like, but it is difficult to completely remove all the abrasive powder. Moreover, when the abrasive powder is not removed and remains on the partition walls, the abrasive powder disturbs contact between the soot and the oxidation catalyst. Therefore, a time required for the regeneration becomes long. When the area of the region A where the smoothing treatment by the end-surface polishing is performed is set to the predetermined area or smaller as described above, it is possible to suppress the adhesion of the abrasive powder to the partition walls to a certain degree. It is possible to alleviate the disturbance of the contact between the soot of the abrasive powder and the oxidation catalyst.

In the plugged honeycomb structure 1 of the present invention, there is not any special restriction on a material constituting the honeycomb structured body (the structure excluding the plugged portions 4) 2. However, from the viewpoints of a strength, a thermal resistance and the like, preferable examples of the material include silicon carbide (SiC); a silicon-silicon carbide composite material formed by using silicon carbide (SiC) as an aggregate and silicon (Si) as a binder; silicon nitride; cordierite; mullite; alumina; spinel; a silicon carbide-cordierite composite material; lithium aluminum silicate; aluminum titanate; and an Fe-Cr-Al metal. Moreover, as the constituent material of the plugged portions 4, the same material as that of the honeycomb structured body 2 is preferably used to decrease a thermal expansion difference between the plugged portions 4 and the honeycomb structured body 2.

In the plugged honeycomb structure 1 of the present invention, a thickness of the partition walls 7 is preferably from 7 to 20 mil (178 to 508 $\mu$m), more preferably from 8 to 16 mil (203 to 406 $\mu$m), and further preferably from 10 to 14 mil (254 to 356 $\mu$m). When the thickness of the partition walls 7 is smaller than 7 mil (178 $\mu$m), the strength becomes insufficient, and a thermal shock resistance deteriorates sometimes. On the other hand, when the thickness of the partition walls 7 exceeds 20 mil (508 $\mu$m), the pressure loss becomes excessively large sometimes.

Moreover, in the plugged honeycomb structure 1 of the present invention, a cell density is preferably from 140 to 350 cells/in$^2$ (cpsi (cells per square inch)) (217 kilo to 543 kilo cells/m$^2$), more preferably from 160 to 320 cpsi (248 kilo to 496 kilo cells/m$^2$), and further preferably from 200 to 300 cpsi (310 kilo to 465 kilo cells/m$^2$). When the cell density is smaller than 140 cpsi (217 kilo cells/m$^2$), a contact efficiency with a fluid becomes insufficient sometimes. On the other hand, when the cell density exceeds 350 cpsi (543 kilo cells/m$^2$), the pressure loss becomes excessively large sometimes.

As a method of preparing the honeycomb structured body (the structure excluding the plugged portions 4) 2 constituting the plugged honeycomb structure 1 of the present invention, a heretofore known method can be used. As an example of a specific method, a binder such as methylcellulose, hydroxypropoxyl cellulose, hydroxyethylcellulose, carboxymethylcellulose or polyvinyl alcohol, a pore former, a surfactant, water as a solvent and the like are added to the above material to obtain a kneaded material having plasticity. This kneaded material is extruded into a predetermined honeycomb shape, and then dried with microwaves, hot air or the like, followed by firing. The firing may be performed prior to forming the plugged portions 4 in the cells 9, or may be performed together with the firing of the plugged portions 4 after forming the plugged portions 4 in the cells 9.

As a method of plugging the cells 9, a heretofore known method can be used. As an example of a specific method, a sheet is attached to the end surface of the honeycomb structured body 2 prepared by the above method. Afterward, holes are made at positions of the sheet which correspond to the cells to be plugged. While this sheet is attached, the end surface of the honeycomb structured body 2 is immersed into a plugging slurry obtained by slurrying the constituent material of the plugged portions 4. Open ends of the cells to be plugged are charged with the plugging slurry through the holes made in the sheet. The honeycomb structured body is dried and fired to harden.

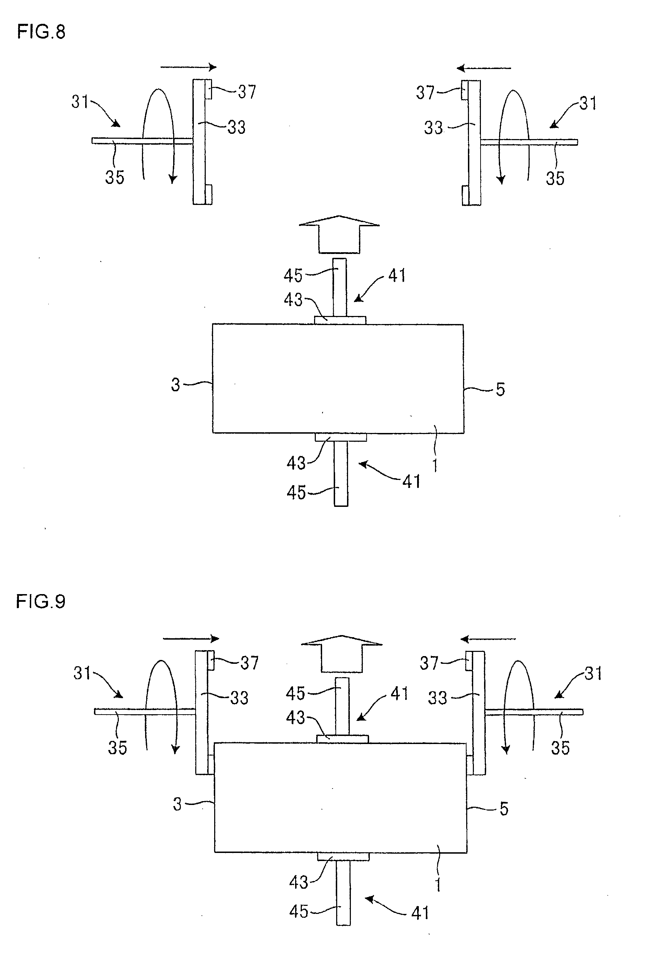

The plugged honeycomb structure 1 of the present invention is obtained by plugging the cells 9 by such a method and then performing the smoothing treatment by the end-surface polishing. Fig. 8 and Fig. 9 are explanatory views showing an example of a method of the smoothing treatment by the end-surface polishing. In this example, for the smoothing treatment by the end-surface polishing, there are used a pair of polishing tools 31 (a set of two polishing tools) each including a round rotary plate 33, a rotary shaft 35 attached vertically to the center of one surface of the rotary plate 33, and a ring-like grindstone 37 attached to the other surface of the rotary plate 33. The pair of polishing tools 31 are arranged so that the surfaces of the rotary plates 33 to which the grindstones 37 are attached face each other and so that the rotary shafts 35 are positioned along the same axis. The rotary shafts 35 are rotated by a not-shown drive mechanism, thereby rotating the rotary plates 33 and the grindstones 37. Moreover, the pair of polishing tools 31 are arranged movably in the axial direction of the rotary shafts 35, whereby a space between the tools can be regulated.

The outer peripheral portions of the plugged honeycomb structure 1 subjected to the smoothing treatment by the end-surface polishing are held in a diametric direction by a pair of chuck tools 41 (a set of two chuck tools) each including a plate-like chuck portion 43 and a shaft 45 attached vertically to one surface of the chuck portion 43. The chuck tools 41 are constituted so that the plugged honeycomb structure 1 is movable in the diametric direction while the plugged honeycomb structure 1 is held.

Furthermore, as shown in Fig. 8, the tool are arranged so that an axis line of the rotary shafts 35 of the polishing tools 31 is orthogonal to that of the shafts 45 of the chuck tools 41, and the chuck tools 41 holding the plugged honeycomb structure 1 are brought close to the polishing tools 31 which are present in the diametric direction of the plugged honeycomb structure 1. As shown in Fig. 9, the respective end surfaces (the inlet end surface 3 and the outlet end surface 5) of the plugged honeycomb structure 1 are brought into contact with the grindstones 37 of the polishing tools 31. At this time, the grindstones 37 of the polishing tools 31 are rotated at a high speed with a rotation number of about 50 to 500 rpm. Thus, the end surfaces of the plugged honeycomb structure 1 are brought into contact with the grindstones 37, and the grindstones 37 are rotated at a high speed, whereby the end surfaces of the plugged honeycomb structure 1 are subjected to the smoothing treatment by the end-surface polishing.

It is to be noted that a polishing amount of the end-surface polishing in a depth direction can be regulated by controlling a space between the pair of polishing tools 31.

Thus, as a method of obtaining the area of the region where the smoothing treatment by the end-surface polishing is performed, there can be used, for example, a method in which the whole end surfaces are dyed with a dye stuff which does not easily infiltrate into the plugged honeycomb structure prior to performing the treatment. After performing the treatment, an area of a region from which the dye stuff has been removed by polishing is obtained by image analysis.

Examples

Hereinafter, the present invention will be described in detail with respect to examples, but the present invention is not limited to these examples.

(Examples 1 to 3 and Comparative Example 1)

A binder, a dispersant, water and the like were added to a raw material (obtained by mixing predetermined amounts of talc, alumina and kaolin) constituting cordierite, followed by kneading, to prepare a kneaded material. This kneaded material was extruded to obtain a honeycomb-like formed body (the honeycomb formed body). Next, open frontal areas of predetermined cells on an inlet end surface side of the obtained honeycomb formed body and open frontal areas of the remaining cells on an outlet end surface side thereof were charged with a plugging material. The open frontal areas were charged with the plugging material so that the cells whose open frontal areas were charged with the plugging material and the cells which were not charged with the plugging material developed checkered patterns in the respective end surfaces. Moreover, a composition of the plugging material was the same as that of the honeycomb formed body. Afterward, this honeycomb formed body was fired at a predetermined temperature for a predetermined period of time, to obtain a plugged honeycomb structure whose outer shape was a columnar shape with a diameter of 144 mm and a length of 152 mm. A partition wall thickness was 12 mil (305 $\mu$m), a cell density was 300 cpsi (465 kilo cells/m$^2$), and a cell shape was a quadrangular shape. It is to be noted that at this time, recess portions (shrinkage cavities) having a depth of about 0.11 to 0.12 mm were generated at ends of plugged portions of the obtained plugged honeycomb structure.

Next, as shown in Fig. 10, each of end surfaces (an inlet end surface 3 and an outlet end surface 5) of an obtained plugged honeycomb structure 1 were divided into three regions a to c by using, as boundaries, a circle 15 having the same center as that of each end surface and having a diameter 0.4D which was 40% of a diameter D of the end surface and a circle 17 having the same center as that of the end surface and having a diameter 0.8D which was 80% of the diameter D of the end surface. It is to be noted that in these three regions, the region a occupied 16% of the total area of each end surface, the region b occupied 49% of the total area of the end surface, and the region c occupied 35% of the total area of the end surface.

Then, in the respective end surfaces of this plugged honeycomb structure, a smoothing treatment by end-surface polishing was performed so that a depth H of recess portions generated at ends of plugged portions became smaller than 0.02 mm. In the regions a to c, area ratios of the regions subjected to the treatment had values shown in Table 1. Thus, plugged honeycomb structures of Examples 1 to 3 and Comparative Example 1 were obtained. It is to be noted that the smoothing treatment by the end-surface polishing was performed by a method described above with reference to Fig. 8 and Fig. 9. As to the plugged  honeycomb structures of Examples 1 to 3 and Comparative Example 1 subjected to the smoothing treatment by the end-surface polishing in this manner, a pressure loss increase ratio and a regeneration performance were evaluated by the following methods. The evaluation results are shown in Table 2.

[Evaluations of Pressure Loss Increase Ratio]

Each plugged honeycomb structure was attached to an exhaust tube of a diesel engine. Then, the diesel engine was operated to circulate an exhaust gas through the plugged honeycomb structure, thereby depositing soot in the plugged honeycomb structure at a rate of 6 g/l. Afterward, an exhaust gas temperature was raised to about 600°C, and an exhaust gas flow rate was controlled at 2 m$^3$/min. The soot deposited in the plugged honeycomb structure was burned by regulating time so that a regeneration efficiency obtained by the following equation (1) became from 50% to 60%. This regeneration cycle was repeated 20 times. Afterward, there were measured a pressure loss (the first pressure loss) of the plugged honeycomb structure prior to burning the soot (a state where 6 g/l of the soot was deposited) in the first regeneration cycle and a pressure loss (the twentieth pressure loss) of the plugged honeycomb structure prior to burning the soot (the state where 6 g/l of the soot was deposited) in the twentieth regeneration cycle. When the twentieth pressure loss was twice the first pressure loss or smaller, the evaluation was "Good". When the loss exceeded twice, the evaluation was "Bad".

$$\text{Regeneration efficiency (\%)}$$
$$= (\text{an initial soot amount} - \text{a soot amount after the regeneration})/\text{the initial soot amount} \times 100 \qquad (1)$$

[Evaluation of Regeneration Performance]

The partition walls of the plugged honeycomb structure were coated with a slurry containing an oxidation catalyst to load the oxidation catalyst onto the partition walls. Afterward, this structure was placed into a metal container, and assembled into an exhaust system of a downstream portion of the diesel engine, together with an oxidation catalyst loading member prepared separately. Next, the diesel engine was operated to circulate the exhaust gas through the plugged honeycomb structure, and 6 g/l of the soot was deposited in the plugged honeycomb structure. Afterward, an exhaust gas temperature was raised to about 600°C, and held for five minutes, to perform a regeneration treatment of burning the soot deposited in the plugged honeycomb structure. The regeneration efficiency was obtained from the soot amount (the initial soot amount) prior to the regeneration and the soot amount after the regeneration by the above equation (1). When the regeneration efficiency was 50% or larger, the evaluation was "Good". When the regeneration efficiency was smaller than 50%, the evaluation was "Bad".

(Comparative Example 2)

In the same manner as in Examples 1 to 3 and Comparative Example 1, a plugged honeycomb structure prior to a smoothing treatment by end-surface polishing was obtained as the plugged honeycomb structure of Comparative Example 2. As to this plugged honeycomb structure of Comparative Example 2, a pressure loss increase ratio and a regeneration performance were evaluated in the same manner as in Examples 1 to 3 and Comparative Example 1. The evaluation results are shown in Table 2.

(Comparative Example 3)

In the same manner as in Examples 1 to 3 and Comparative Example 1, a plugged honeycomb structure prior to a smoothing treatment by end-surface polishing was obtained. End surfaces (an inlet end surface and an outlet end surface) of this plugged honeycomb structure were spray-coated with a densifying material, and then dried at about 500°C, to obtain the plugged honeycomb structure of Comparative Example 3. It is to be noted that the densifying material was prepared by adding a binder, a pore former, a dispersant, water and the like to a raw material (obtained by mixing predetermined amounts of talc, alumina and kaolin) constituting cordierite, followed by kneading, and regulating a viscosity to be suitable for the spray-coating. A depth H of recess portions at ends of plugged portions of the structure spray-coated with the densifying material and dried was smaller than 0.02 mm. As to this plugged honeycomb structure of Comparative Example 3, a pressure loss increase ratio and a regeneration performance were evaluated in the same manner as in Examples 1 to 3 and Comparative Example 1. The evaluation results are shown in Table 2.

[Table 1]

| | Inlet end surface | | | | Outlet end surface | | | | Inlet end surface and outlet end surface | |
|---|---|---|---|---|---|---|---|---|---|---|
| | Area ratio of region subjected to smoothing treatment by end-surface polishing *1 (%) | | | Depth of recess portion at plugged portion end (mm) | Area ratio of region subjected to smoothing treatment by end-surface polishing *2 (%) | | | Depth of recess portion at plugged portion end (mm) | Area ratio of region subjected to smoothing treatment by end-surface polishing *3 (%) | Area ratio of region included in regions b and c among regions subjected to smoothing treatment by end-surface polishing *4 (%) |
| | Region a | Region b | Region c | | Region a | Region b | Region c | | | |
| Example 1 | 0 | 10 | 35 | Smaller than 0.02 | 0 | 20 | 35 | Smaller than 0.02 | 50 | 60 |
| Example 2 | 0 | 19 | 22 | Smaller than 0.02 | 0 | 18 | 15 | Smaller than 0.02 | 37 | 44 |
| Example 3 | 12 | 35 | 35 | Smaller than 0.02 | 10 | 43 | 35 | Smaller than 0.02 | 85 | 88 |
| Comparative Example 1 | 0 | 0 | 12 | Smaller than 0.02 | 0 | 0 | 24 | Smaller than 0.02 | 18 | 21 |
| Comparative Example 2 | 0 | 0 | 0 | 0.12 | 0 | 0 | 0 | 0.11 | 0 | 0 |

EP 2 505 253 B1

| | Inlet end surface | | | | Outlet end surface | | | | Inlet end surface and outlet end surface | |
|---|---|---|---|---|---|---|---|---|---|---|
| | Area ratio of region subjected to smoothing treatment by end-surface polishing *1 (%) | | | Depth of recess portion at plugged portion end (mm) | Area ratio of region subjected to smoothing treatment by end-surface polishing *2 (%) | | | Depth of recess portion at plugged portion end (mm) | Area ratio of region subjected to smoothing treatment by end-surface polishing *3 (%) | Area ratio of region included in regions b and c among regions subjected to smoothing treatment by end-surface polishing *4 (%) |
| | Region a | Region b | Region c | | Region a | Region b | Region c | | | |
| Comparative Example 3 | 0 | 0 | 0 | Smaller than 0.02 | 0 | 0 | 0 | Smaller than 0.02 | 0 | 0 |

*1: the ratio of the area of the region subjected to the smoothing treatment by the end-surface polishing of the inlet end surface, which occupies the total area of the inlet end surface *2: the ratio of the area of the region subjected to the smoothing treatment by the end-surface polishing of the outlet end surface, which occupies the total area of the outlet end surface *3: the ratio of the area of the region subjected to the smoothing treatment by the end-surface polishing of the inlet end surface and the outlet end surface, which occupies the total area of the inlet end surface and the outlet end surface *4: the ratio of the area of the region included in the regions b and c among the regions subjected to the smoothing treatment by the end-surface polishing of the inlet end surface and outlet end surface, which occupies the total area of the area of the regions b and c of the inlet end surface and the area of the regions b and c of the outlet end surface

[Table 2]

| | Evaluation | |
|---|---|---|
| | Pressure loss increase ratio | Regeneration performance |
| Example 1 | Good | Good |
| Example 2 | Good | Good |
| Example 3 | Good | Bad |
| Comparative Example 1 | Bad | Good |
| Comparative Example 2 | Bad | Good |
| Comparative Example 3 | Bad | Good |

As shown in Table 2, the plugged honeycomb structures of Examples 1 to 3 according to the embodiment of the present invention indicated a high evaluation result in the evaluation of the pressure loss increase ratio as compared with the plugged honeycomb structure of Comparative Example 2 which was not subjected to the smoothing treatment by the end-surface polishing. In the plugged honeycomb structure of Comparative Example 3 in which the smoothing treatment by the end-surface polishing was not performed and the ends of the plugged portions were densified by the spray-coating of the densifying material, the smoothing treatment by the end-surface polishing was not performed, and hence lengths of cells varied. In addition, the densifying material adhered not only to the ends of the plugged portions but also to the partition walls functioning as filter layers. Therefore, as to the evaluation of the pressure loss increase ratio, the structure was inferior to the plugged honeycomb structures of Examples 1 to 3 in the evaluation result. Moreover, in the plugged honeycomb structure of Comparative Example 1 in which the area of the region subjected to the smoothing treatment by the end-surface polishing was smaller than 35% of the total area of the inlet end surface and the outlet end surface, the region subjected to the treatment was excessively small. Therefore, a sufficient treatment effect could not be obtained, and as to the evaluation of the pressure loss increase ratio, the structure was inferior to the plugged honeycomb structures of Examples 1 to 3 in the evaluation result. It is to be noted that in the plugged honeycomb structure of Example 3, the area of the region subjected to the smoothing treatment by the end-surface polishing exceeded 84% of the total area of the inlet end surface and the outlet end surface. As to the evaluation of the regeneration performance, the structure was inferior to the plugged honeycomb structures of Examples 1 and 2 in the evaluation result. It has been considered that the region subjected to the smoothing treatment by the end-surface polishing was excessively broad and hence abrasive powder generated by the treatment adhered to the partition walls in a broad range, to disturb the contact between the soot and the oxidation catalyst.

A plugged honeycomb structure of the present invention can suitably be used as a dust collecting filter such as a DPF.

Description of Reference Numerals

1: plugged honeycomb structure. 2: honeycomb structured body. 3: inlet end surface, 4: plugged portion, 5: outlet end surface, 7: partition wall. 9: cell, 11: recess portion, 13: circle, 15: circle, 17: circle, 31: polishing tool, 33: rotary plate, 35: rotary shaft, 37: grindstone, 41: chuck tool, 43: chuck portion, and 45: shaft.

**Claims**

1.  A plugged honeycomb structure comprising: a honeycomb structured body where a plurality of cells communicating between an inlet end surface which becomes an inlet side of a fluid and an outlet end surface which becomes an outlet side of the fluid are partitioned by porous partition walls; and plugged portions to plug open frontal areas of the predetermined cells on the side of the inlet end surface and open frontal areas of the remaining cells on the side of the outlet end surface,
    wherein the plugged portions are formed by charging the cells with a constituent material of the plugged portions, followed by firing, and
    in a region having an area which is 35% or larger of the total area of the inlet end surface and the outlet end surface, a smoothing treatment by end-surface polishing is performed so that a depth of a recess portion generated at an end of each of the plugged portions during the firing becomes small.

2. The plugged honeycomb structure according to claim 1, wherein the smoothing treatment by the end-surface polishing is performed so that the depth of the recess portion becomes smaller than 0.02 mm.

3. The plugged honeycomb structure according to claim 1 or 2, wherein in a region where the smoothing treatment by the end-surface polishing is performed, an area of a region included in the outside of a circle having, as a center thereof, a center of the largest circle contained in each of the inlet end surface and the outlet end surface and having a diameter which is 40% of a diameter of the largest circle is an area which is 40% or larger of the total area of the outside of the circle.

4. The plugged honeycomb structure according to any one of claims 1 to 3, wherein an area of the region where the smoothing treatment by the end-surface polishing is performed is an area which is 84% or smaller of the total area of the inlet end surface and the outlet end surface.

**Patentansprüche**

1. Verschlossene Wabenstruktur, umfassend: einen Wabenstrukturkörper, bei dem eine Vielzahl von Zellen, die zwischen einer Einlassendfläche, die eine Einlasseite eines Fluids wird, und einer Auslassendfläche, die zu einer Auslassseite des Fluids wird, kommunizieren, durch poröse Trennwände getrennt sind; und verschlossene Abschnitte, um offene Stirnbereiche der vorbestimmten Zellen auf der Seite der Einlassendfläche und offene Stirnbereiche der übrigen Zellen auf der Seite der Auslassendfläche zu verschließen,
worin die verschlossenen Abschnitte durch Beladen der Zellen mit einem Ausgangsmaterial der verschlossenen Abschnitte und anschließendes Brennen gebildet werden, und
in einem Bereich mit einer Fläche, die 35 % oder mehr der Gesamtfläche der Einlassendfläche und der Auslassendfläche beträgt, eine Glättungsbehandlung durch Endflächenpolieren durchgeführt wird, so dass die Tiefe eines Aussparungsabschnitts, der während des Brennvorgangs an einem Ende jedes der verschlossenen Abschnitte entsteht, klein wird.

2. Verschlossene Wabenstruktur nach Anspruch 1, worin die Glättungsbehandlung durch Polieren der Endfläche so durchgeführt wird, dass die Tiefe des Aussparungsabschnitts kleiner als 0,02 mm wird.

3. Verschlossene Wabenstruktur nach Anspruch 1 oder 2, worin in einem Bereich, in dem die Glättungsbehandlung durch Polieren der Endfläche durchgeführt wird, eine Fläche eines Bereichs, der außerhalb eines Kreises beinhaltet ist, der als Mittelpunkt den Mittelpunkt des größten Kreises, der in jeder der Einlassendfläche und der Auslassendfläche enthalten ist, aufweist, und einen Durchmesser aufweist, der 40 % des Durchmessers des größten Kreises beträgt, eine Fläche ist, die 40 % oder mehr der Gesamtfläche des Äußeren des Kreises beträgt.

4. Verschlossene Wabenstruktur nach einem der Ansprüche 1 bis 3, worin die Fläche des Bereichs, in dem die Glättungsbehandlung durch Polieren der Endflächen durchgeführt wird, eine Fläche ist, die 84 % oder weniger der Gesamtfläche der Einlassendfläche und der Auslassendfläche beträgt.

**Revendications**

1. Structure en nid d'abeilles obturée comprenant : un corps de structure en nid d'abeilles dans lequel une pluralité de cellules en communication entre une surface d'extrémité d'entrée qui devient un côté d'entrée d'un fluide et une surface d'extrémité de sortie qui devient un côté de sortie du fluide sont séparées par des parois de séparation poreuses ; et des parties obturées pour obturer les zones avant ouvertes des cellules prédéterminées du côté de la surface d'extrémité d'entrée et les zones avant ouvertes des cellules restantes du côté de la surface d'extrémité de sortie,
dans laquelle les parties obturées sont formées par le remplissage des cellules avec un matériau constitutif des parties obturées, suivi d'une cuisson, et
dans une région ayant une aire qui est égale à 35 % ou plus de l'aire totale de la surface d'extrémité d'entrée et de la surface d'extrémité de sortie, un traitement de lissage par polissage d'une surface d'extrémité est effectué de sorte qu'une profondeur d'une partie en retrait générée à une extrémité de chacune des parties obturées pendant la cuisson devienne faible.

2. Structure en nid d'abeilles obturée selon la revendication 1, dans laquelle le traitement de lissage par polissage d'une surface d'extrémité est effectué de sorte que la profondeur de la partie en retrait devienne inférieure à 0,02 mm.

3. Structure en nid d'abeilles obturée selon la revendication 1 ou 2, dans laquelle, dans une région dans laquelle un traitement de lissage par polissage d'une surface d'extrémité est effectué, une aire d'une région incluse à l'extérieur d'un cercle ayant, en tant que centre de celui-ci, un centre du cercle le plus grand contenu dans chacune de la surface d'extrémité d'entrée et de la surface d'extrémité de sortie et ayant un diamètre qui est égal à 40 % d'un diamètre du cercle le plus grand est une aire qui est égale à 40 % ou plus de l'aire totale de l'extérieur du cercle.

4. Structure en nid d'abeilles obturée selon l'une quelconque des revendications 1 à 3, dans laquelle une aire de la région dans laquelle le traitement de lissage par polissage d'une surface d'extrémité est effectué est une aire qui est égale à 84 % ou plus de l'aire totale de la surface d'extrémité d'entrée et de la surface d'extrémité de sortie.

FIG.1

FIG.2

FIG.3

FIG.4

FIG.5

FIG.6

FIG.7

FIG.8

FIG.9

**FIG.10**

**FIG.11**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1857163 A
- JP 2005211836 A